# FASCICULE DE BREVET EUROPEEN

(11) **EP 1 153 800 B1**
(45) Date de publication et mention de la délivrance du brevet: **17.03.2004**
(21) Numéro de dépôt: 01401199.3
(22) Date de dépôt: 11.05.2001
(51) Int. Cl.: B60R 13/10, B60R 25/00

(54) **Agencement pour le marquage antivol d'une structure de caisse de véhicule automobile**
Diebstahlschutzanordnung für Kraftfahrzeugkarosseriestruktur
Theft detection arrangement for car body structure

(30) Priorité: 11.05.2000 FR 0006017
(43) Date de publication de la demande: 14.11.2001
(73) Titulaire: Renault s.a.s., 92100 Boulogne Billancourt (FR)
(72) Inventeur: Breton, Gilles, 91400 Saclay (FR); Ejzenberg, Richard, 78160 Marly le Roi (FR)

(56) Documents cités:
- DE-A- 4 403 145
- DE-A- 19 652 729
- FR-A- 2 222 711

## Description

L'invention concerne un agencement pour le marquage antivol d'une structure de caisse de véhicule automobile.

L'invention concerne plus particulièrement un agencement pour le marquage anti-vol d'une structure de caisse de véhicule automobile, du type dans lequel la structure de caisse comporte un plancher dont une face supérieure porte un numéro d'identification principal agencé selon une empreinte de profondeur normalisée définie par la norme 32-00-002/C, et du type dans lequel la face supérieure porte un numéro d'identification supplémentaire agencé selon une empreinte de profondeur supérieure à la profondeur normalisée.

On connaît de nombreux exemples d'agencements de ce type.

De manière connue, la plupart des véhicules actuels comportent un numéro d'identification principal qui est généralement frappé à froid sur la caisse du véhicule, selon une empreinte de profondeur normalisée définie par la norme 32-00-002/C.

Le numéro d'identification principal est destiné à pouvoir être lu facilement lors d'une inspection du véhicule, de sorte que son emplacement est facile d'accès. Il est généralement agencé sur le plancher du véhicule.

L'empreinte de ce numéro d'identification principal présente l'inconvénient d'être de profondeur réduite, c'est-à-dire de l'ordre de 0,3 millimètre, de sorte qu'en cas de vol du véhicule, elle peut être facilement martelée pour être effacée et remplacée par une empreinte correspondant à un numéro d'identification falsifié empêchant l'identification du véhicule. Cette manipulation est d'autant plus facile que le numéro est facile d'accès. Le véhicule peut alors être facilement revendu dans son intégralité ou en pièces détachées sans qu'il soit possible de déterminer sa provenance.

Pour remédier à cet inconvénient, on a proposé de doter la structure de caisse d'un numéro d'identification supplémentaire, tel que défini par le groupement d'assureurs britanniques THATCHAM, qui ne soit pas facilement accessible.

En particulier, ce numéro d'identification supplémentaire doit être agencé en deux exemplaires sur le plancher du véhicule, dans des parties centrale et arrière de celui-ci, et doit être dissimulé sous une couche de matériau insonorisant du plancher.

Son empreinte doit être inscrite dans un cadre de 120 millimètres par 10 millimètres, avec une hauteur de caractères de 5 millimètres, et suivant une profondeur normalisée de 0,5 millimètre.

Une telle empreinte peut être réalisée soit par un procédé de marquage par laser, soit par un procédé de déformation plastique à froid tel que le poinçonnage ou la micro percussion.

La réalisation des empreintes de ce numéro d'identification supplémentaire pose de nombreux problèmes.

En premier lieu, les moyens de réalisation des empreintes ne sont pas flexibles. En effet, compte tenu du grand nombre de modèles présents au sein de la gamme d'un constructeur automobile, il est difficile de réaliser un outillage commun à tous les modèles pour le marquage de ce numéro d'identification supplémentaire, sans entraîner des investissements dont le coût est prohibitif.

En deuxième lieu, la taille importante de l'empreinte, inscrite dans un cadre de 120 millimètres par 10 millimètres, complique notablement sa mise en position dans une zone du plancher qui soit à la fois facile d'accès pour l'outillage considéré et qui soit susceptible de résister au procédé de marquage utilisé.

En troisième lieu, la profondeur importante de l'empreinte, qui est de 0,5 millimètre, impose, notamment dans le cadre de l'utilisation d'un procédé de déformation plastique à froid, de disposer d'un outillage permettant d'exercer sur l'élément de structure de caisse un effort de contre-réaction s'opposant à l'outil réalisant le marquage pour éviter que ne se produise une déchirure dans la tôle du véhicule. Un tel outillage est d'un coût prohibitif.

Pour remédier à ces inconvénients, l'invention propose un agencement du type décrit précédemment comportant un numéro d'identification suppfémentaire rapporté.

Dans ce but, l'invention propose un agencement du type décrit précédemment, caractérisé en ce que le numéro d'identification supplémentaire est porté par une plaque qui est rapportée sur la face supérieure du plancher de manière à éviter l'emploi d'un outillage spécial de déformation plastique pour le marquage du plancher.

Selon d'autres caractéristiques de l'invention :
- la plaque rapportée est agencée dans un évidement complémentaire du plancher dont la profondeur est sensiblement égale à l'épaisseur de la plaque,
- la plaque rapportée est collée dans l'évidement, avant sa fixation définitive sur le plancher,
- l'évidement est agencé au droit des places arrière du véhicule,
- l'évidement est agencé dans le fond d'un puits de réception d'une roue de secours du véhicule,
- une face supérieure de la plaque, agencée dans le prolongement d'une portion de face supérieure du plancher, est recouverte par le revêtement insonorisant du plancher avant le passage de la structure de caisse en étuve de peinture,
- le numéro d'identification supplémentaire est marqué dans la plaque par un procédé de déformation plastique,
- le numéro d'identification supplémentaire est marqué dans la plaque par un procédé de gravage au laser.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un plancher du véhicule comportant un agencement suivant l'invention, et
- la figure 2 est une vue de détail en coupe d'un agencement selon l'invention.

Dans la description qui va suivre, des chiffres de référence identiques désignent des pièces identiques ou ayant des fonctions similaires.

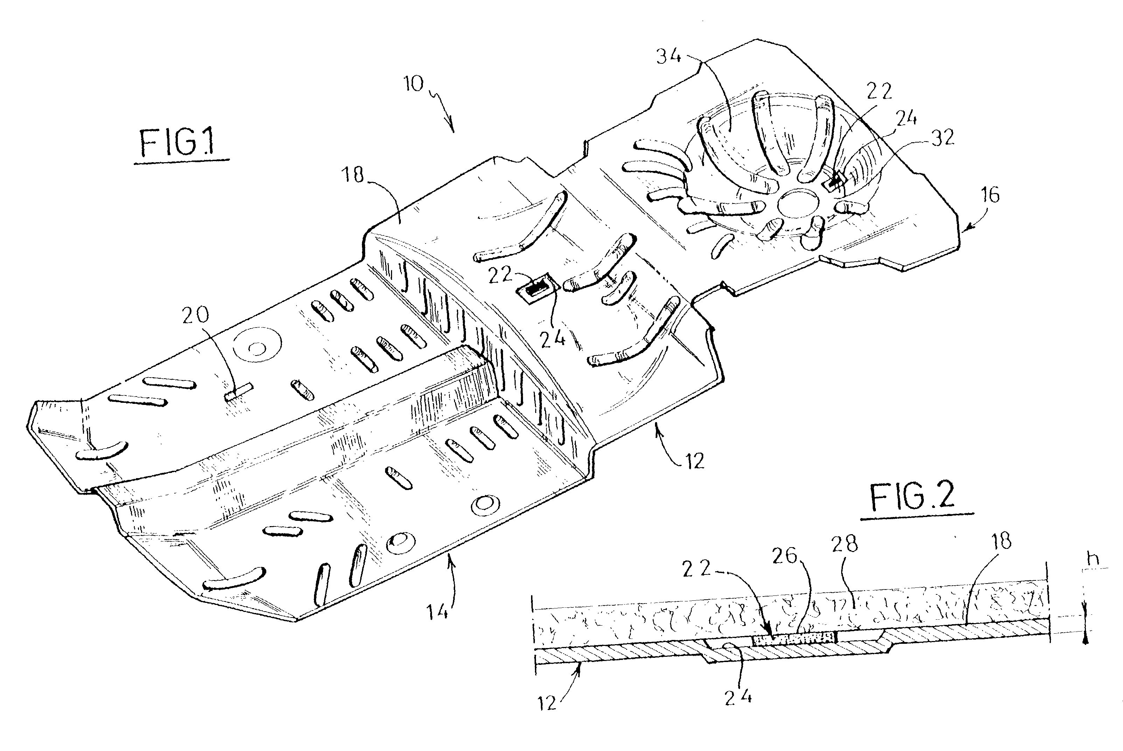

On a représenté à la figure 1 un agencement 10 pour le marquage anti-vol d'une structure de caisse de véhicule automobile.

De manière connue, la structure de caisse comporte un plancher 12 formé d'une partie avant 14 et d'une partie arrière 16.

De manière connue, la partie avant est 14 notamment la partie du plancher 12 qui est agencée dans l'habitacle du véhicule et la partie arrière 16 est notamment la partie du plancher 12 qui est agencée dans le compartiment à bagages ou coffre du véhicule.

De manière connue, une face supérieure 18 du plancher 12 porte un numéro d'identification principal qui est agencé selon une empreinte 20 de profondeur normalisée définie par la norme 32-00-002/C, c'est à dire notamment une empreinte dont la profondeur est au moins égale à 0,3 millimètre avant la peinture de la caisse du véhicule, et qui est agencée, comme représenté à la figure 1, de manière visible sans démontage de pièces entraînant l'utilisation d'outils, sur le côté droit du plancher. L'empreinte 20 représentée à la figure 1 est agencée sur la partie avant 14 de la face supérieure 18 du plancher 12.

De manière connue, la face supérieure 18 du plancher porte un numéro d'identification supplémentaire qui est agencé selon une empreinte de profondeur supérieure à la profondeur normalisée de l'empreinte 20 du numéro d'identification principal.

Conformément à l'invention, le numéro d'identification supplémentaire est porté par une plaque 22 qui est rapportée sur la face supérieure 18 du plancher 12 de manière à éviter l'emploi d'un outillage spécial de déformation plastique pour le marquage du plancher 12.

En particulier, comme l'illustre la figure 2, la plaque 22 rapportée est agencée dans un évidement 24 complémentaire qui est formé dans le plancher 12 et dont la profondeur "h" est sensiblement égale à l'épaisseur de la plaque 22. L'évidement 24 est notamment formé dans la face supérieure 18 du plancher 12 lors de l'emboutissage de celui-ci.

Avantageusement, lors de l'assemblage du véhicule, la plaque 22 rapportée est collée dans l'évidement 24, avant sa fixation définitive sur le plancher 12, par exemple par un procédé de rivetage ou de soudage.

Par ailleurs, pour éviter que le numéro d'identification supplémentaire ne soit facilement lisible et falsifiable, et dans le but de le dissimuler et de le rendre difficilement accessible à des falsificateurs éventuels de manière à permettre une identification ultérieure du véhicule, une face supérieure 26 de la plaque, agencée dans le prolongement d'une portion 30 de face supérieure du plancher est recouverte par le revêtement insonorisant 28 du plancher 12 avant le passage de la structure de caisse en étuve de peinture.

De la sorte, seuls des agents habilités connaissant l'emplacement exact du numéro d'identification supplémentaire sur le plancher 12 du véhicule en fonction du type de véhicule examiné peuvent ôter le revêtement insonorisant 28 pour découvrir le numéro d'identification supplémentaire et identifier ainsi le véhicule.

Ainsi, la figure 1 illustre deux emplacements définis conformément aux spécifications du groupement d'assureurs britanniques THATCHAM pour la localisation de la plaque 22.

Un premier évidement 24 recevant une première plaque 22 est agencé sur la partie avant 14 de la face supérieure 18 du plancher 12 au droit des places arrière du véhicule.

Un deuxième évidement 24 recevant une deuxième plaque 22 est agencé sur la partie arrière 16 de la face supérieure 18 du plancher 12 dans le fond 32 d'un puits 34 de réception d'une roue de secours du véhicule.

Enfin, différents procédés peuvent être utilisés pour le marquage du numéro supplémentaire d'identification du véhicule.

Dans le mode de réalisation préféré de l'invention, le numéro d'identification supplémentaire est marqué sur la plaque 22 par un procédé de déformation plastique tel qu'un procédé de micro percussion ou de poinçonnage. Toutefois, le numéro d'identification supplémentaire peut aussi être marqué dans la plaque 22 par un procédé de gravage au laser.

L'invention permet donc une protection supplémentaire du véhicule contre le vol puisque, le numéro de marquage supplémentaire permet l'identification du véhicule, qu'il soit revendu dans son intégralité ou démonté pour être revendu en pièces détachées.

## Revendications

1. Agencement (10) pour le marquage antivol d'une structure de caisse de véhicule automobile, du type dans lequel la structure de caisse comporte un plancher (12) dont une face supérieure (18) porte un numéro d'identification principal agencé selon une empreinte (20) de profondeur normalisée définie par la norme 32-00-002/C, et du type dans lequel la face supérieure (18) porte un numéro d'identification supplémentaire agencé selon une empreinte de profondeur supérieure à la profondeur normalisée
**caractérisé en ce que** le numéro d'identification supplémentaire est porté par une plaque (22) qui est rapportée sur la face supérieure (18) du plancher (12) de manière à éviter l'emploi d'un outillage spécial de déformation plastique pour le marquage du plancher (12).

2. Agencement (10) selon la revendication précédente, **caractérisé en ce que** la plaque (22) rapportée est agencée dans un évidement (24) creux complémentaire du plancher (12) dont la profondeur (h) est sensiblement égale à l'épaisseur de la plaque (22).

3. Agencement (10) selon la revendication précédente, **caractérisé en ce que** la plaque (22) rapportée est collée dans l'évidement (24), avant sa fixation définitive sur le plancher (12).

4. Agencement (10) selon l'une des revendications 2 ou 3, **caractérisé en ce que** l'évidement (24) est agencé au droit des places arrière du véhicule.

5. Agencement (10) selon l'une des revendications 2 ou 3, **caractérisé en ce que** l'évidement est agencé dans le fond (32) d'un puits (34) de réception d'une roue de secours du véhicule.

6. Agencement (10) selon l'une quelconque des revendications 2 à 5, **caractérisé en ce qu'**une face supérieure (26) de la plaque (22), agencée dans le prolongement d'une portion (30) de face supérieure (18) du plancher (12) est recouverte par le revêtement insonorisant (28) du plancher (12) avant le passage de la structure de caisse en étuve de peinture.

7. Agencement (10) selon l'une quelconque des revendications précédentes, **caractérisé en ce que** le numéro d'identification supplémentaire est marqué dans la plaque (22) par un procédé de déformation plastique.

8. Agencement (10) selon l'une quelconque des revendications précédentes, **caractérisé en ce que** le numéro d'identification supplémentaire est marqué dans la plaque (22) par un procédé de gravage au laser.

## Claims

1. An arrangement (10) for the antitheft marking of an automobile vehicle bodywork structure, of the type in which the bodywork structure comprises a floor (12), an upper surface (18) of which bears a main identification number arranged as an imprint (20) of standard depth defined by standard 32-00-002/C, and of the type in which the upper surface (18) bears an ancillary identification number arranged as an imprint of depth greater than the standard depth, **characterised in that** the ancillary identification number is borne by a plate (22) which is added to the upper surface (18) of the floor (12) in order to avoid the use of special plastic deformation tools for the marking of the floor (12).

2. An arrangement (10) as claimed in the preceding claim, **characterised in that** the added plate (22) is arranged in a complementary hollow recess (24) of the floor (12) whose depth (h) is substantially equal to the thickness of the plate (22).

3. An arrangement (10) as claimed in the preceding claim, **characterised in that** the added plate (22) is glued into the recess (24) before being permanently secured to the floor (12).

4. An arrangement (10) as claimed in one of claims 2 or 3, **characterised in that** the recess (24) is arranged at right angles to the rear seats of the vehicle.

5. An arrangement (10) as claimed in one of claims 2 or 3, **characterised in that** the recess is disposed in the base (32) of a reception well (34) for a spare wheel of the vehicle.

6. An arrangement (10) as claimed in any one of claims 2 to 5, **characterised in that** an upper surface (26) of the plate (22), arranged as a prolongation of a portion (30) of the upper surface (18) of the floor (12), is covered by the sound-proofing covering (28) of the floor (12) before the bodywork structure is forwarded to the painting oven.

7. An arrangement (10) as claimed in any one of the preceding claims, **characterised in that** the ancillary identification number is marked on the plate (22) by a plastic deformation method.

8. An arrangement (10) as claimed in any one of the preceding claims, **characterised in that** the ancillary identification number is marked on the plate (22) by a laser engraving method.

## Patentansprüche

1. Anordnung (10) für die Diebstahlssicherungsmarkierung einer Gehäusestruktur eines Kraftfahrzeugs von dem Typ, in welchem die Gehäusestruktur einen Boden (12) aufweist, von dem eine obere Fläche (18) eine Hauptidentifikationsnummer trägt, welche gemäß einer Prägung (20) einer standardisierten Tiefe zusammengesetzt ist, die durch die Norm 32-00-002/C definiert ist, und von dem Typ, in welchem die obere Fläche (18) eine zusätzliche Identifikationsnummer trägt, welche gemäß einer Prägung einer Tiefe zusammengesetzt ist, die größer als die standardisierte Tiefe ist,
**dadurch gekennzeichnet, dass**
die zusätzliche Identifikationsnummer durch eine Platte (22) getragen wird, welche an der oberen Fläche (18) des Bodens (12) in einer Weise angefügt ist, um den Einsatz eines Spezialwerkzeugs zur plastischen Verformung für die Markierung des Bodens (12) zu vermeiden.

2. Anordnung (10) gemäß dem vorherigen Anspruch, **dadurch gekennzeichnet, dass** die angefügte Platte (22) in einer hohlen, zusätzlichen Vertiefung (24) des Bodens (12) eingesetzt ist, deren Tiefe (h) im Wesentlichen gleich zu der Dicke der Platte (22) ist.

3. Anordnung (10) gemäß dem vorherigen Anspruch, **dadurch gekennzeichnet, dass** die angefügte Platte (22) in der Vertiefung (24) vor ihrer endgültigen Befestigung an dem Boden (12) eingeklebt ist.

4. Anordnung (10) gemäß einem der Ansprüche 2 oder 3, **dadurch gekennzeichnet, dass** die Vertiefung (24) rechts von den hinteren Sitzen des Fahrzeugs vorgesehen ist.

5. Anordnung (10) gemäß einem der Ansprüche 2 oder 3, **dadurch gekennzeichnet, dass** die Vertiefung in dem Boden (32) eines Aufnahmeschachts (34) eines Reserverads des Fahrzeugs vorgesehen ist.

6. Anordnung (10) gemäß irgendeinem der Ansprüche 2 bis 5, **dadurch gekennzeichnet, dass** eine obere Fläche (26) der Platte (22), die in der Verlängerung eines Abschnitts (30) der Oberfläche (18) des Bodens (12) vorgesehen ist, durch einen schallisolierenden Überzug (28) des Bodens (12) vor dem Durchführen der Gehäusestruktur durch einen Farbauftragsofen überzogen ist.

7. Anordnung (10) gemäß irgendeinem der vorherigen Ansprüche, **dadurch gekennzeichnet, dass** die zusätzliche Identifikationsnummer in der Platte (22) durch ein plastisches Verformungsverfahren markiert ist.

8. Anordnung (10) gemäß irgendeinem der vorherigen Ansprüche, **dadurch gekennzeichnet, dass** die zusätzliche Identifikationsnummer in der Platte (22) durch ein Laser-Gravurverfahren markiert ist.
